# EUROPÄISCHE PATENTSCHRIFT

(11) **EP 2 065 628 B1**
(45) Veröffentlichungstag und Bekanntmachung des Hinweises auf die Patenterteilung: **16.03.2016**
(21) Anmeldenummer: 08020216.1
(22) Anmeldetag: 20.11.2008
(51) Int. Cl.: F16L 23/04, F16L 37/56, B60H 1/00, F16L 37/12

(54) **Anordnung mit einem Verbindungselement für eine Rohrkupplung**
Assembly with a connecting element for a pipe coupling
Agencement avec un élément de liaison pour un accouplement tubulaire

(30) Priorität: 29.11.2007 DE 102007057888
(43) Veröffentlichungstag der Anmeldung: 03.06.2009
(73) Patentinhaber: MAHLE Behr GmbH & Co. KG, 70469 Stuttgart (DE)
(72) Erfinder: Spörl, Franz, 85104 Wackerstein (DE); Auchter, Holger, 70599 Stuttgart (DE); Galahroudi, Kamal, 68199 Mannheim (DE)
(74) Vertreter: Grauel, Andreas

(56) Entgegenhaltungen:
- EP-A1- 1 544 532
- EP-A1- 1 821 058
- EP-A2- 0 629 806
- DE-A1- 3 005 790
- DE-A1- 10 029 366
- DE-A1-102006 005 496
- JP-A- 2006 144 948

## Beschreibung

Die vorliegende Erfindung betrifft eine Anordnung mit einem Verbindungselement für eine Rohrkupplung nach dem Oberbegriff des Anspruchs 1. Eine solche Anordnung ist zum Beispiel aus der DE 100 29 366 A1 bekannt.

Die genannte DE 100 29 366 A1 beschreibt eine Rohrkupplung für ein Anschlussrohr eines Wärmetauschers, bei der zwei mit radialen Wulsten versehene Rohrenden ineinander steckbar sind, wobei eine aus zwei separaten Teilen bestehende Kunststoffschelle radial und die Wulste formschlüssig übergreifend über den Bereich der Rohrkupplung steckbar sind. Die beiden Kunststoffteile umfangen die Rohrkupplung um jeweils etwa 180° und weisen zur gegenseitigen Festlegung korrespondierende Mittel mit mehrstufigen Verrastungen auf.

Hierbei ist die Montage der Kunststoffteile über der Rohrkupplung insbesondere an schwer zugänglichen Stellen problematisch, da ein Monteur regelmäßig beide Hände zur Festlegung der Kunststoffteile an der Rohrkupplung benötigt. Aufgrund der Mehrstufigkeit der Verrastung ist ein ordnungsgemäßer Sitz der verrasteten Kunststoffteile über der Rohrkupplung im Zuge der Montage nicht sichergestellt.

Es ist die Aufgabe der Erfindung, ein Verbindungselement für eine Rohrkupplung anzugeben, bei dem die Montage auch an schwer zugänglichen Stellen auf einfache Weise und mit hoher Sicherheit erfolgen kann und insbesondere das Verbindungselement prozesssicher in eindeutiger Position verrastet.

Diese Aufgabe wird für eine eingangs genannte Anordnung mit einem Verbindungselement erfindungsgemäß mit den kennzeichnenden Merkmalen des Anspruchs 1 gelöst. In einem Grundgedanken der Erfindung umfasst der Kupplungsbereich des Rohrs ein erstes Rohrende und ein in das erste Rohrende bis zu einem Anschlag einschiebbares zweites Rohrende, wobei ein Dichtungsmittel zwischen den Rohrenden angeordnet ist. Bei einer solchen Anordnung der Rohrkupplung sind vorrangig axiale Haltekräfte durch das Verbindungselement erforderlich, so dass die Montage bezüglich der radialen Haltekräfte unkritisch ist. Diese Anordnung kommt einem erfindungsgemäßen Verbindungselement besonders entgegen. Insbesondere kann auf das Erfordernis einer mehrstufigen Feinverrastung zur Einstellung einer radialen Haltekraft verzichtet werden.

Erfindungsgemäß weist zumindest eines der Elementteile eine teilkreisförmige Innenbahn auf, wobei die Innenbahn eine Ausnehmung zur axial formschlüssigen Halterung des Kupplungsbereichs aufweist. Somit ist eine sichere Anlage über den Umfang der Rohrkupplung bei axial formschlüssiger Halterung auf einfache Weise ermöglicht. In diese Ausnehmung ist nun in Umfangsrichtung zumindest bereichsweise ein Steg einstückig angeformt. Der Steg erstreckt sich in radialer Richtung bis nahe an den Kupplungsbereich heran, so dass ein Verrasten der beiden Elementteile verhindert wird, wenn sich das Dichtungsmittel in einem Ringkanal zwischen einem Rohr und einem Verbindungsmittel befindet.

In einer weiteren Ausführungsform, die nicht im Rahmen der Erfindung liegt, kann die Ausnehmung der Innenbahn eine Kontur aufweisen, die der Rohrkontur folgt. Somit wird auf ähnliche Weise erreicht, dass ein Verrasten der beiden Elementteile verhindert wird, wenn sich das Dichtungsmittel in einem Ringkanal zwischen einem Rohr und einem Verbindungsmittel befindet.

In einer bevorzugten Ausführungsform wird die Verbindung der beiden Elementteile über eine flexible Brücke realisiert. Durch die Verbindung der beiden Elementteile über eine flexible Brücke kann auch bei nur einhändiger Montage an schwer zugänglichen Stellen zunächst das eine Elementteil platziert werden und dann durch Bewegung z. B. eines freien Fingers des Monteurs das andere Elementteil sicher vorpositioniert und mit dem ersten Elementteil formschlüssig verrastet werden.

Vorteilhat ist diese flexible Brücke als Rollband ausgeführt. Zusätzlich kann das Rollband auf seiner Oberfläche eine Nockenstruktur aufweisen. Somit wird das Band besonders widerstandsfähig und kann nicht mehr brechen.

Vorteilhaft umfasst zumindest eines der formschlüssigen Mittel einen Haken, wobei ein Schaft des Hakens im festgelegten Zustand im Wesentlichen in Umfangsrichtung des Rohrs verläuft und ein Fortsatz des Hakens an einer Aufnahme eines der anderen formschlüssigen Mittel hinterschneidend angreift und im wesentlichen radial zu dem Rohr verläuft. Hierdurch ist besonders bei einhändiger Bedienung eine einfache und sichere Verrastung der formschlüssigen Mittel ermöglicht. Besonders bevorzugt ist dabei der Fortsatz des Hakens bezüglich der radialen Richtung nach innen gerichtet. Dies ermöglicht beispielsweise, durch Andrücken des Schaftes des Hakens den Fortsatz des Hakens einrasten zu lassen. Somit ist zugleich eine in radialer Richtung raumsparende Anordnung gegeben, bei der der Fortsatz des Hakens geschützt und sicher aufgenommen ist. In alternativer Ausführung kann je nach Anforderungen der Fortsatz des Hakens auch radial Richtung nach außen gerichtet sein. Eine solche Lösung kann zum Beispiel dann bevorzugt sein, wenn das festgelegte Verbindungselement auf einfache Weise wieder gelöst werden soll, was dann etwa durch nach innen gerichtetes Eindrücken der Fortsätze der Haken erfolgen kann.

Weiterhin bevorzugt ist an dem Schaft des Hakens ein Vorsprung zur Anlage eines Fingers einer Bedienperson ausgebildet, wobei ein Verschließen des Hakens durch eine Kraftbeaufschlagung des Vorsprungs einleitbar ist. Besonders dann, wenn der Monteur keine Sichtkontrolle hat und aufgrund einer schwer zugänglichen Stelle eine einhändige Montage vornehmen muss, bietet ein solcher Vorsprung zur Anlage eines Fingers eine gute haptische Kontrolle und ermöglicht eine besonders sichere und einfache Montage.

In weiterhin bevorzugter Detailausführung ist ein Ende der flexiblen Brücke an dem Haken, insbesondere an dem Fortsatz des Hakens, angeordnet. Hierdurch ist der mit der Brücke verbundene Haken im Zuge des Umlegens des zweiten Elementteils um die Rohrkupplung durch die Brücke geführt in seine formschlüssige Aufnahme einrastbar, wodurch die Anzahl der insbesondere ohne Sicht erfolgenden Handbewegungen im Zuge der Montage weiter verringert werden kann.

Bei einer vorteilhaften Ausführung weist die Aufnahme Wände auf, wobei der Haken im festgelegten Zustand von den Wänden zumindest teilweise abgedeckt wird. Hierdurch ist allgemein eine gute Sicherung des Hakens gegen unbeabsichtigtes Lösen durch Anstoßen mit Werkzeugen oder seitliches Verrutschen vermieden. Insbesondere kann hierdurch eine Ausführung geschaffen werden, bei der der Haken nach seiner Verrastung im Zuge der Montage nicht mehr zerstörungsfrei lösbar ist, so dass das Verbindungselement eine Einwegverbindung darstellt.

In einer allgemein bevorzugten Ausführungsform sind die formschlüssig aneinander festgelegten Elementteile nicht zerstörungsfrei lösbar. Hierdurch ist zum einen sichergestellt, dass bei einer Wartung oder Reparatur notwendig ein neues Verbindungselement verwendet wird. Des weiteren kann hierdurch erreicht werden, dass lediglich qualifizierte Werkstätten und Fachleute, die über die entsprechenden speziell ausgeformten Verbindungselemente verfügen, eine solche Wartung an den betreffenden Rohrkupplungen vornehmen können. Alternativ ist hierbei die Außenkontur des Verbindungselementes mit Ansatzstellen für ein gezieltes Ansetzen eines Trennwerkzeuges versehen.

In einer vorteilhaften Ausführungsform weist das erste Elementteil eine teilkreisförmige Innenbahn zur Anlage an dem Rohr auf, wobei die Innenbahn einen Kreiswinkel von mehr als 180°, insbesondere zwischen etwa 190° und etwa 240°, einschließt. Insbesondere vorteilhaft weist das zweite Elementteil dabei ebenfalls eine teilkreisförmige Innenbahn zur Anlage an dem Rohr auf, wobei die Innenbahn des zweiten Elementteils einen Kreiswinkel einschließt, der nicht größter als der den Winkel der ersten Innenbahn zu 360° ergänzende Winkel ist. Insgesamt kann somit das erste Elementteil zuerst auf das Rohr radial aufgesteckt werden, wobei es durch seinen großen Teilkreiswinkel selbstständig an das Rohr geklammert ist. Hierdurch kann der Monteur das einmal aufgesteckte Verbindungselement auch loslassen, z.B. zwecks eines Umgreifens, um die weitere Montage zu vervollständigen. Die Montage ist hierdurch erheblich vereinfacht und insbesondere wird ein Herunterfallen von Verbindungselementen im Zuge der Montage weitgehend vermieden, was insbesondere dann sehr ärgerlich ist, wenn die Verbindungselemente in schwer zugängliche Stelle eines Kraftfahrzeugs hineinfallen können.

Bei einer Weiterbildung ist in zumindest einem der Elementteile zumindest eine Durchbrechung vorgesehen, wobei durch die Durchbrechung zumindest ein Gasaustausch zwischen dem Kupplungsbereich und dem Außenraum ermöglicht ist. Hierdurch ist mit einfachen Mitteln eine Dichtigkeitsprüfung einer montierten Gesamtvorrichtung ermöglicht. Besonders bevorzugt ist dabei durch die Durchbrechung eine Sichtkontrolle des Kupplungsbereichs ermöglicht. Hierdurch lässt sich unmittelbar nach der Festlegung der Verbindungselemente eine erste Kontrolle auf richtigen Sitz von Verbindungselement und Rohrenden durchführen.

Ein Verbindungselement der erfindungsgemäßen Anordnung ist allgemein bevorzugt als einstückiges Kunststoff-Formteil ausgebildet. Besonders bevorzugt ist es als Spritzgussteil ausgebildet. Auf diese Weise lassen sich die durchaus aufwendig geformten Verbindungselemente kostengünstig in großer Stückzahl herstellen.

Durch einen 180° überschreitenden Winkel der Innenbahn kann das erste Elementteil zuerst auf das Rohr radial aufgesteckt werden, wobei es sich zunächst federnd etwas aufbiegt und dann elastisch zurückschnappt, so dass es nicht nur axial, sondern auch radial formschlüssig an dem Rohr gehalten ist. Nachfolgend kann der Monteur das zunächst nur mit dem ersten Elementteil aufgesteckte Verbindungselement auch loslassen, z.B. zwecks eines Umgreifens, um die weitere Montage zu vervollständigen. Die Montage ist hierdurch erheblich vereinfacht und insbesondere wird ein Herunterfallen von Verbindungselementen im Zuge der Montage weitgehend vermieden.

Durch zumindest einen weiteren Aufnahmebereich lassen sich gleich zwei (oder bei weiteren Aufnahmebereichen entsprechend mehr) Rohre in ihrem Kupplungsbereich verbinden. Hierdurch kann insgesamt Bauraum gespart werden, und die simultane Festlegung mehrerer Rohre vereingert die Anzahl von Montageschritten.

In vorteilhafter Weiterbildung weisen die Aufnahmebereiche jeweils eine teilkreisförmige Innenbahn zur Anlage an dem jeweiligen Rohr auf. Besonders bevorzugt schließt dabei jeweils eine der dem ersten Rohr zugeordneten und der dem zweiten Rohr zugeordneten Innenbahnen einen Kreiswinkel von mehr als 180°, insbesondere zwischen etwa 190° und etwa 240°, ein. Hierdurch können die Rohre auf einfache Weise in die umgreifenden Innenbahnen rastend radial eingesteckt werden, so dass der Monteur das Rohr und/oder das Elementteil zur weiteren Montage zunächst loslassen kann.

In einer weiteren vorteilhaften Ausgestaltung weisen die Elementteile jeweils zwischen den benachbarten Aufnahmebereichen ein formschlüssiges Verbindungsmittel auf. Hierdurch kann eine besonders sichere Festlegung erreicht werden, wobei die Elementteile insbesondere in radialer Richtung federelastisch gespannt gehalten sein können. Zweckmäßig sind zudem jeweils endseitige Verbindungsmittel vorgesehen, so dass im Fall von zwei Rohren eine formschlüssige Verbindung in insgesamt drei Ebenen erfolgt.

Zur Einsparung von Herstellungskosten und zur Vereinfachung einer Vorratshaltung können die beiden Elementteile als Gleichteile ausgebildet sein.

In alternativer Ausführung können die beiden Elementteile auch als nicht gleiche Teile ausgebildet sein. Hierdurch ist insbesondere vorteilhaft ermöglicht, dass eines der beiden Elementteile an jedem seiner zumindest zwei Aufnahmebereiche eine Innenbahn aufweist, die einen Kreiswinkel von mehr als 180°, insbesondere zwischen etwa 190° und etwa 240°, einschließt. Somit können beide Rohre zunächst an dem gleichen Elementteil eingeclipst bzw. rastend gehalten werden, bevor das zweite Elementteil zum sicheren Verschluss der Rohrkupplungen aufgesetzt wird. Unter anderem vereinfacht dies die Montage an schwer zugänglichen Stellen.

Weitere Merkmale und Vorteile der Erfindung ergeben sich aus den nachfolgend beschriebenen Ausführungsbeispielen sowie aus den abhängigen Ansprüchen.

Nachfolgend werden mehrere bevorzugte Ausführungsbeispiele eines Verbindungselementes beschrieben und anhand der anliegenden Zeichnungen näher erläutert.
- Fig. 1: zeigt eine räumliche Ansicht eines Verbindungselements in einem geöffneten Zustand.
- Fig. 2: zeigt das Verbindungselement aus Fig. 1 in einem geschlossenen und an einer Rohrkupplung festgelegten Zustand.
- Fig. 3: zeigt ein Verbindungselement und zwei Rohre in einer Schnittansicht
- Fig. 4: zeigt ein weiteres Ausführungsbeispiel eines Verbindungselementes mit zwei Rohren in einer Schnittansicht
- Fig. 5: zeigt eine seitliche Draufsicht auf das Verbindungselement aus Fig. 1.
- Fig. 6: zeigt eine stimseitige Draufsicht auf das Verbindungselement aus Fig. 5.
- Fig. 7: zeigt eine seitliche Schnittansicht entlang der Schnittlinie A-A aus Fig. 6.
- Fig. 8: zeigt eine Detallvergrößerung des Bereichs B aus Fig. 7.
- Fig. 9: zeigt eine seitliche Draufsicht wie in Fig. 5 in einem geschlossenen Zustand des Verbindungselements.
- Fig. 10: zeigt eine Schnittansicht entlang der Schnittlinie C-C aus Fig. 9.
- Fig. 11: zeigt eine Draufsicht von vorne auf ein weiteres Ausführungsbeispiel.
- Fig. 12: zeigt eine Draufsicht von oben auf das Verbindungselement aus Fig. 11.
- Fig. 13: zeigt eine Draufsicht auf die in Fig. 11 abgewandte Seite des dort gezeigten Verbindungselements.
- Fig. 14: zeigt das Verbindungselement aus Fig. 11 unter räumlicher Darstellung zweier separierter Elementteilen.
- Fig. 15: zeigt eine räumliche Darstellung eines weiteren Ausführungsbeispiels.
- Fig. 16: zeigt ein Elementteil des Verbindungselements aus Fig. 15.
- Fig. 17: zeigt ein weiteres Ausführungsbeispiel eines Verbindungselementes.

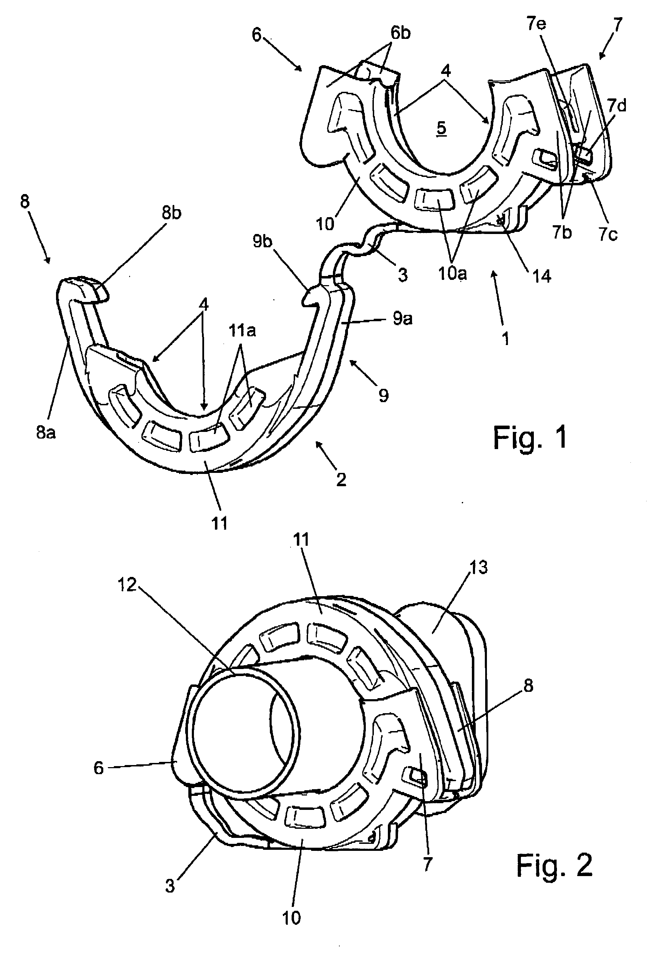

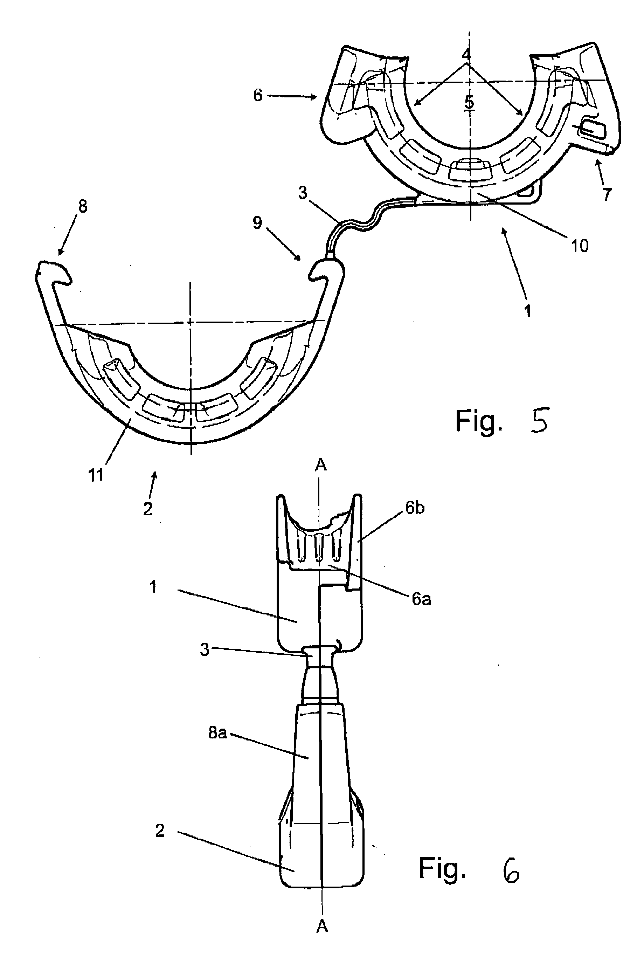

Die Fig. 1 bis Fig. 9 zeigen ein Verbindungselement, das als einstückiges Kunststoffteil ausgebildet ist und im Spritzgussverfahren hergestellt wird.

Das Verbindungselement umfasst ein erstes Elementteil 1 und ein zweites Elementteil 2. Die beiden Elementteile 1, 2 sind über eine stegartige Brücke 3 einstückig miteinander verbunden. Die Brücke 3 ist bezüglich ihres Durchmessers in Abhängigkeit von dem verwendeten Kunststoffmaterial so ausgelegt, dass sie weitgehend elastisch biegbar ist.

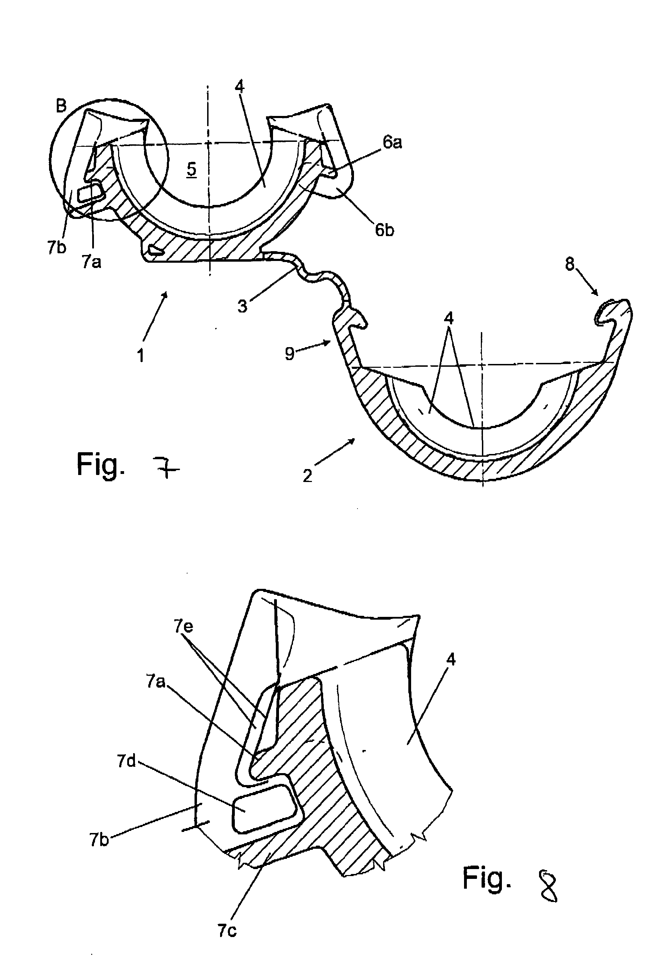

Das erste Elementteil 1 ist im Wesentlichen als teilkreisförmiger Ring ausgebildet, wobei eine Innenbahn 4 einen offenen zentralen Bereich 5 des Elementteils 1 über einen Winkelbereich von etwa 220° umläuft. Jeweils in den endseitigen Bereichen des Teilkreisrings sind formschlüssige Mittel 6, 7 vorgesehen. Diese umfassen jeweils eine radial nach außen vorstehende Kante 6a, 7a (siehe insbesondere Fig. 7).

Die erste Aufnahme 6 weist zwei Wände 6b auf, die die Kante 6a in einer zur Rohrkupplungsachse senkrechten Richtung in radialer Richtung überdecken. Entsprechende Wände 7b weist auch die zweite Aufnahme 7 auf, wobei bei der zweiten Aufnahme 7 zusätzlich eine dritte Wand 7c vorgesehen ist, die senkrecht zu den Wänden 7b steht und diese miteinander verbindet. In den parallelen Seitenwänden 7b ist jeweils eine Durchbrechung 7d als Sichtfenster vorgesehen.

Das zweite Elementteil 2 hat ebenfalls eine Innenbahn 4 zur Anlage an der Rohrkupplung, wobei die Innenbahn 4 im Falle des zweiten Elementteils 2 lediglich einen Kreiswinkel von etwa 140° beschreibt. Insgesamt ergänzen sich die Kreiswinkel der Innenbahnen 4 der beiden Elementteile 1, 2 somit zum Vollkreis von 360°. Je nach Fertigungstoleranzen oder vorgesehener elastischer Verspannung im festgelegten Zustand können die Teilwinkel der Elementteile 1, 2 sich auch zu einem Winkel von weniger als 360° addieren.

Das zweite Elementteil 2 weist an seinen jeweiligen Endbereichen ebenfalls formschlüssige Mittel 8, 9 auf, die im Unterschied zu den Aufnahmen 6, 7 als mit den Aufnahmen 6, 7 korrespondierende Haken ausgeformt sind. Jeder der Haken 8, 9 hat einen im wesentlichen geraden und um einen gewissen Bereich biegbaren Schaft 8a, 9a, welcher endseitig jeweils einen radial nach innen gerichteten Fortsatz 8b, 9b aufweist. Die Fortsätze 8b, 9b sind gegenüber dem Schaft 9a, 8a um mehr als 90° gewinkelt.

Die flexible Brücke 3 mündet mit ihrem einen Ende an einer Außenumfangsfläche 14 des ersten Elementteils 1 im Wesentlichen auf halber Länge zwischen den beiden Aufnahmen 6, 7. Mit ihrem anderen Ende mündet die Brücke 3 im Bereich des Übergangs zwischen dem Schaft 9a und dem Fortsatz 9b des Hakens 9. Die Brücke 3 weist in ihrer Mitte eine U-förmige Einbuchtung auf, wodurch die Brücke 3 in ihrer Längsrichtung federnd streckbar ist.

Jedes der Elementteile 1, 2 hat Seitenwände 10, 11, die sich von der Innenbahn 4 radial nach außen erstrecken und im Wesentlichen senkrecht zu der Rohrachse ausgerichtet sind. Die Seitenflächen 10, 11 haben jeweils Durchbrechungen 10a, 11 a, die eine Sichtkontrolle auf die umschlossene Rohrkupplung zulassen oder auch einen Gasaustausch mit dem Kupplungsbereich zwecks Feststellung einer Leckage. Zudem bewirken die Durchbrechungen 10a, 11a eine Gewichts- und Materialeinsparung. Selbstverständlich können anstelle von Durchbrüchen insbesondere in diesem Zusammenhang auch Vertiefungen vorgesehen werden (ggf. auch nur teilweise).

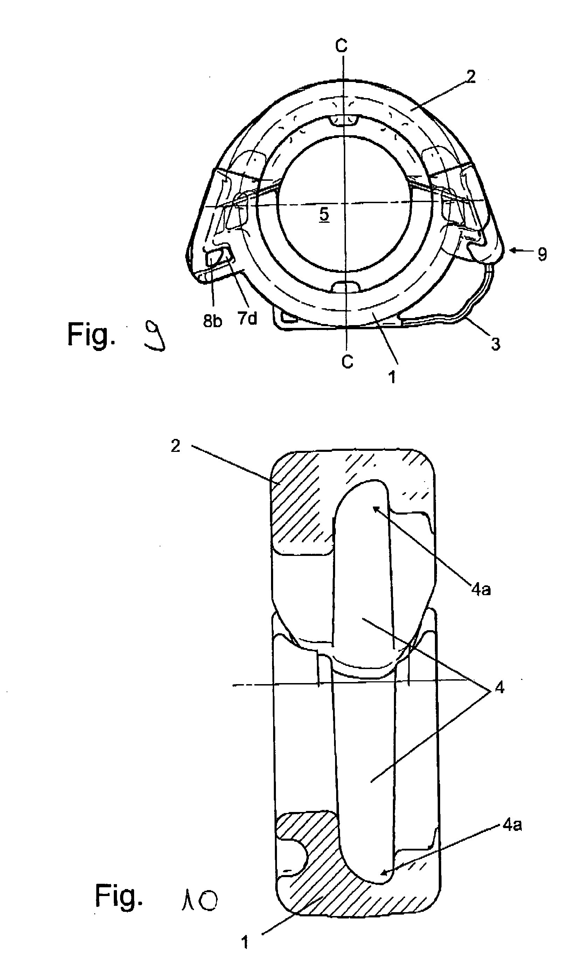

Die Erfindung funktioniert nun wie folgt:
Die Rohrkupplung umfasst ein erstes Rohrende 12, das in ein zweites Rohrende 13 eingeschoben wird. Zwischen den Rohrenden sind nicht dargestellte Dichtungsmittel vorgesehen. Jedes der Rohrenden 12, 13 hat einen radial vorstehenden Wulst (nicht dargestellt), wobei im eingeschobenen Zustand die Wulste als Anschläge aneinander stoßen. Nach dem Ineinanderstecken der Rohrenden 12, 13 wird das Verbindungselement mit seinem ersten Elementteil 1 im Bereich der Rohrkupplung über die vorstehenden Wulste radial aufgesteckt. Die Schnittzeichnung Fig. 10 zeigt, dass die Innenbahn 4 im Profil eine Ausnehmung 4a umfasst, in der die beiden Wulste der beiden Rohrenden 12, 13 in axialer Richtung formschlüssig aufgenommen sind.

Nach dem radialen Aufstecken des ersten Elementteils 1 ist dieses aufgrund des Umfangswinkels von etwa 220° gegen ein Abfallen von der Rohrkupplung formschlüssig gesichert, so dass der Monteur das Verbindungselement z. B. zum Umgreifen loslassen kann.

Nachfolgend wird das zweite Elementteil 2 um die Rohrkupplung gelegt, zum Beispiel durch radiales Andrücken eines Fingers auf die Brücke 3, wobei die biegsame Brücke 3 zunächst den Haken 9 in die Aufnahme 6 führt. Die Länge der Brücke 3 in ihrem nicht elastisch gestreckten Zustand ist so bemessen, dass der Fortsatz 9b des Hakens 9 weitgehend ohne Rastung an der Kante 6a der Aufnahme 6 vorbei in die Kante 6a hinterschneidende Position geführt wird. Der andere Haken 8 liegt mit seinem Fortsatz 8b zunächst auf einer Führungsbahn 7e der anderen Aufnahme 7 auf. Drückt der Monteur nun von außen auf den Schaft 8a des Hakens 8 oder übt er eine geeignete Kraft auf das zweite Elementteil 2 aus, so wird die Brücke 3 elastisch gestreckt bis der Fortsatz 9b des Hakens 9 an die Kante 6a anstößt. Bei weiterer Kraftausübung gleitet der von dem Monteur kraftbeaufschlagte Haken 8 mit seinem Fortsatz 8b über die Kante 7a der Aufnahme 7 und rastet dort formschlüssig ein.

Für diesen Montageschritt kann auf der Außenseite des Schafts 8a des Hakens 8 auch ein Vorsprung vorgesehen sein, an dem der Finger des Monteurs anliegen kann, um eine ausreichende Kraftkomponente in Längsrichtung des Schafts 8a bzw. Umfangsrichtung des Verbindungselements auszuüben.

Mit dem formschlüssigen Verrasten des Hakens 9 in der Aufnahme 6 und des Hakens 8 in der Aufnahme 7 ist das Verbindungselement an der Rohrkupplung festgelegt.

Vorliegend verhindern die Wände 7b, 7c der Aufnahme 7 und die Wände 6b der Aufnahme 6, dass die Haken 8, 9 zerstörungsfrei wieder gelöst werden oder seitlich abrutschen können. Wie zum Beispiel aus Fig. 2 ersichtlich ist, kann wegen der den Haken 8 von drei Seiten umgebenden Wände 7b, 7c kein einfaches Werkzeug zum Lösen des Hakens angesetzt werden. Eine aufgrund der Elastizität des Materials eventuell mögliche gewaltsame Aushebelung der Haken 8, 9 würde zumindest deutliche Spuren in dem Material hinterlassen.

Zur geeigneten Lösung des an der Rohrkupplung festgelegten Verbindungselements ist vielmehr ein Aufschneiden des Elements erforderlich. Hierzu kann z. B. die Brücke 3 durchtrennt werden, wonach der an dem Fortsatz 9b verbleibende Teil der Brücke 3 eine Zuglasche zum Lösen des Hakens 9 von der Aufnahme 6 darstellt.

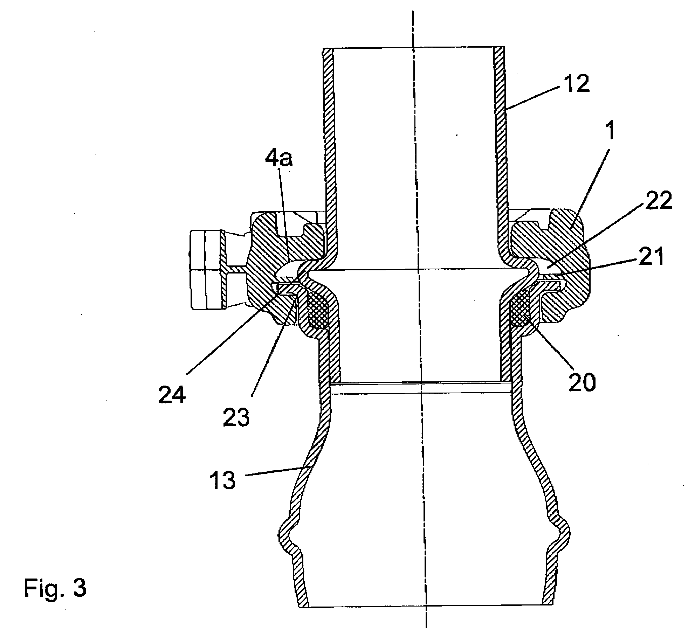

Fig. 3 zeigt ein Ausführungsbeispiel der Erfindung in einer Schnittansicht. Hierbei sind wiederum zwei Rohre 12, 13 ineinandergesteckt, wobei beide Rohrenden einen radial nach außen stehenden Wulst 23, 24 aufweisen. Im eingeschobenen Zustand dienen die Wulste als Anschläge, indem sie aneinander stoßen. Ein Verbindungselement, umfassend ein erstes 1 und zweites Elementteil übergreift die beiden Wulste und stellt eine Verbindung zwischen dem ersten und zweiten Rohr her. Ein Dichtungselement 20, das zwischen den beiden Rohrenden angeordnet ist, sorgt für eine druckdichte Verbindung. In die Ausnehmung 4a ist in Umfangsrichtung ein Steg 21 einstückig angeformt, der sich radial nach innen bis nahe an den Wulst 24 erstreckt. Somit wird ein Verrasten des Verbindungsmittels verhindert, wenn sich das Dichtungsmittel 20 in einem Ringkanal 22 zwischen dem ersten Rohr 12 und dem Verbindungselement befindet.

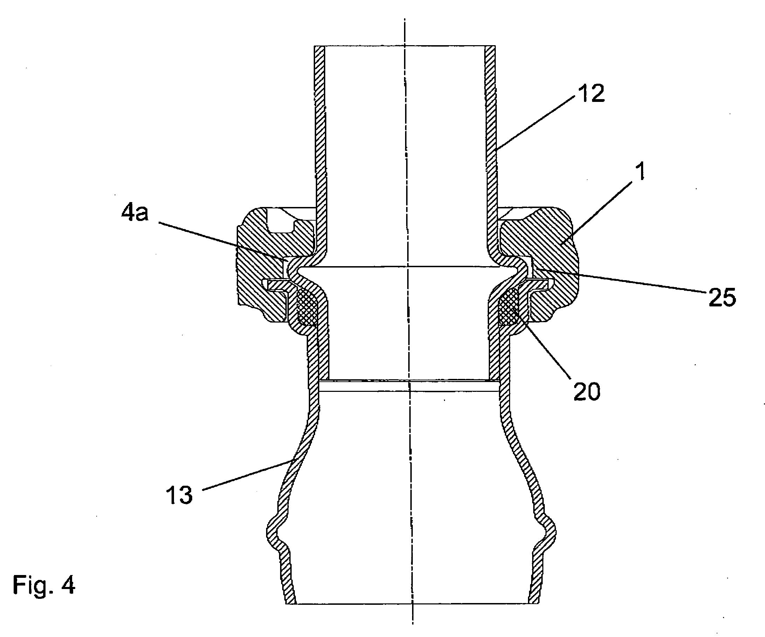

Alternativ und nicht nach der vorliegenden Erfindung könnte gemäß Fig. 4 anstatt des Steges 21 das Verbindungsmittel eine Kontur 25 aufweisen, die der Kontir des Wulstes 24 im Wesentlichen folgt und somit auf ähnliche Weise ein Verrasten des Verbindungsmittels verhindert, wenn sich das Dichtungsmittel 20 zwischen dem ersten Rohr 12 und dem Verbindungselement befindet.

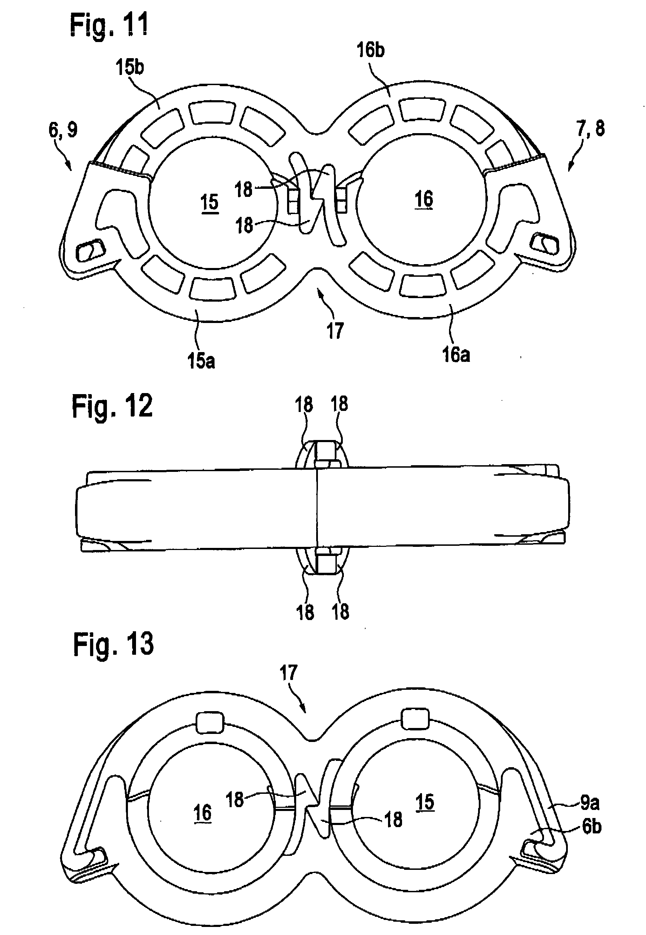

Fig. 11 zeigt ein weiteres Ausführungsbeispiel. Das Verbindungselement umfasst wiederum zwei durch formschlüssige Verbindungsmittel miteinander verrastbare Elementteile 1, 2, die im Unterschied zum ersten Ausführungsbeispiel zwei benachbarte Aufnahmebereiche 15, 16 zur gleichzeitigen Halterung der Rohrkupplungen von zwei parallelen Rohren. Die Elementteile 1, 2 sind dabei jeweils materialeinheitlich einstückige Kunststoffteile.

Jeder der Elementteile 1, 2 hat dabei zwei nach Art einer Arkade oder eines Bogengangs aufeinander folgende Bögen 15a, 15b, 16a, 16b, wobei in Verallgemeinerung des Konstruktionsprinzip auch mehr als zwei Bögen zur simultanen Verbindung einer entsprechend größeren Anzahl von Rohren vorliegenden können.

Zwischen den benachbarten Aufnahmebereichen 15, 16 weist das Verbindungselement eine Einschnürung 17 zur Materialeinsparung auf, so dass das geschlossene Verbindungsmittel im Wesentlichen die Form einer acht hat. In diesem Bereich 17 zwischen den Aufnahmebereichen sind formschlüssige Verbindungsmittel 18 ausgebildet, die jeweils zwei in radialer Richtung vorstehende, federnde Haken an jedem der Elementteile 1, 2 umfassen. Die Haken 18 der beiden Elementeile 1, 2 verrasten bei Festlegung der Elementteile 1, 2 miteinander (siehe etwa Fig. 11), so dass auch im Bereich zwischen den benachbarten Rohren eine formschlüssige Festlegung der Elementteile vorliegt. An den Enden der Arkaden sind jeweils formschlüssige Mittel 6, 7, 8, 9 vorgesehen, die in Form und Funktion im Wesentlichen denjenigen des ersten Ausführungsbeispiels entsprechen. Eine die Montage vereinfachende biegsame Brücke zwischen den Elementteilen 1, 2 ist nicht gezeigt, kann aber wie im ersten Ausführungsbeispiel vorgesehen sein.

Die analog zum ersten Ausführungsbeispiel vorhandenen kreisförmigen Innenbahnen 4 schließen an dem ersten Elementteil 1 jeweils einen Kreiswinkel von mehr als 180° ein und an dem zweiten Elementteil von weniger als 180°. So können die beiden Rohre zunächst verrastend oder nach Art eines Clips an dem ersten Elementteil festgelegt werden, bevor das zweite Elementteil aufgesetzt und mit dem ersten Elementteil verrastet wird.

Zumindest an dem ersten Elementteil 1 ist ein Führungsstift 19 in dem Zwischenbereich 17 vorgesehen, durch den eine Versteifung gegen eine raltive Bewegung der Elementeile erzielt wird. Hierdurch sind die Haken 18 besonderes gut gegen ein unbeabsichtigtes Lösen oder Abrutschen gesichert. Grundsätzlich können die Elementteile 1, 2 in radialer Richtung federelastisch vorgespannt an den Kupplungen der Rohre anliegen, um so über die Formgebung der Innenbahnen 4 auch eine Haltekraft in axialer Richtung der Rohr auszuüben.

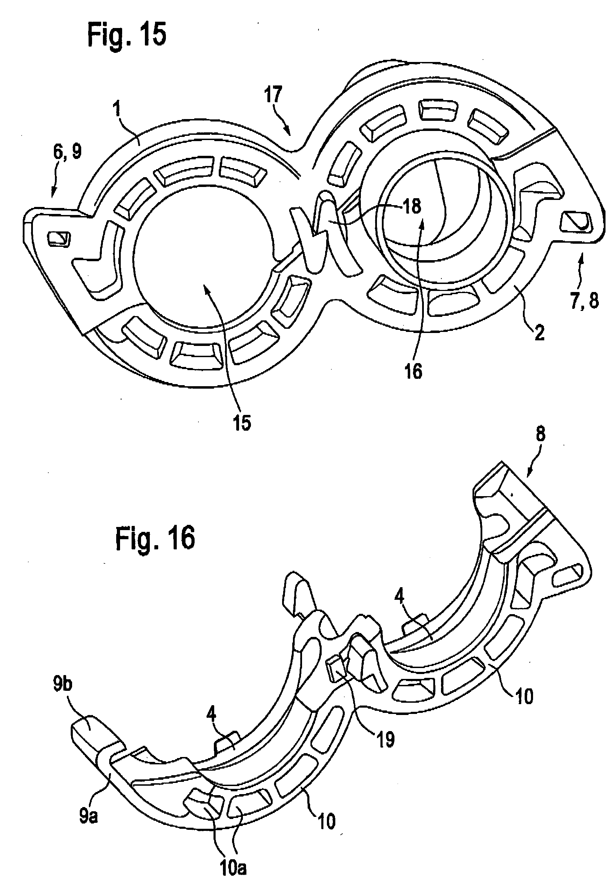

Bei dem dritten Ausführungsbeispiel nach Fig. 15 und Fig. 16 handelt es sich um eine Abwandlung des zweiten Ausführungsbeispiels, wobei wiederum zwei parallele Rohre gleichzeitig von dem Verbindungselement umfangen und in ihren Kupplungsabereichen verbunden werden. Im Unterschied zu dem zweiten Ausführungsbeispiel sind die beiden Elementteile 1, 2 symmetrisch als Gleichteile ausgebildet. Dabei hat jedes der beiden Elementteile 1, 2 in seinem einen Aufnahmebereich 15, 16 eine Kreisbahn 4 mit einem eingeschlossenen Winkel von mehr als 180° und in dem jeweils anderen Aufnahmebereich eine Kreisbahn mit entsprechend weniger als 180° eingeschlossenem Winkel.

Die Ausformung der Elementteile 1, 2 als Gleichteile ermöglicht eine günstigere Herstellung und Vorratshaltung. Eine Verteilung ungleicher Kreiswinkel auf die beiden Kreisbahnen 4 des gleichen Elementteils ist natürlich auch dann möglich, wenn die Elementteile 1, 2 nicht als Gleichteile ausgebildet sind.

Gemäß den Ansprüchen können die einzelnen Merkmale der verschiedenen Ausführungsbeispiele sinnvoll miteinander kombiniert werden.

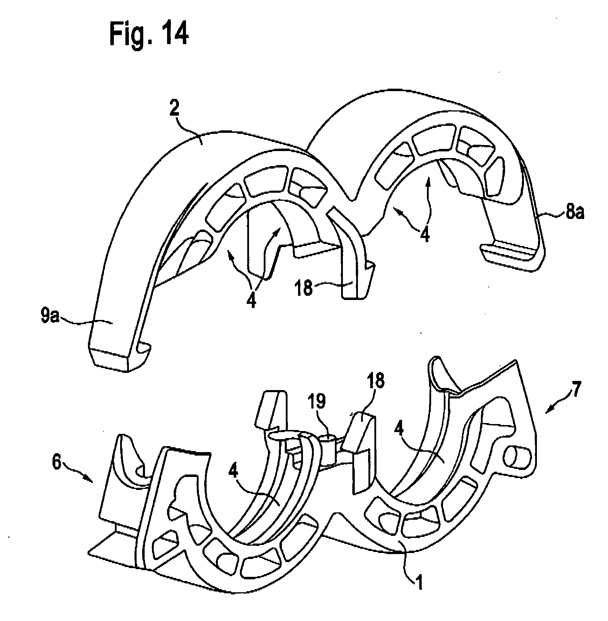

Insbesondere ist in den Ausführungsbeispielen gemäß den Fig. 11 bis Fig. 16 ebenfalls eine Variante nach der Erfindung denkbar, in der ein Steg 21 an die Ausnehmung 4a angeformt ist.

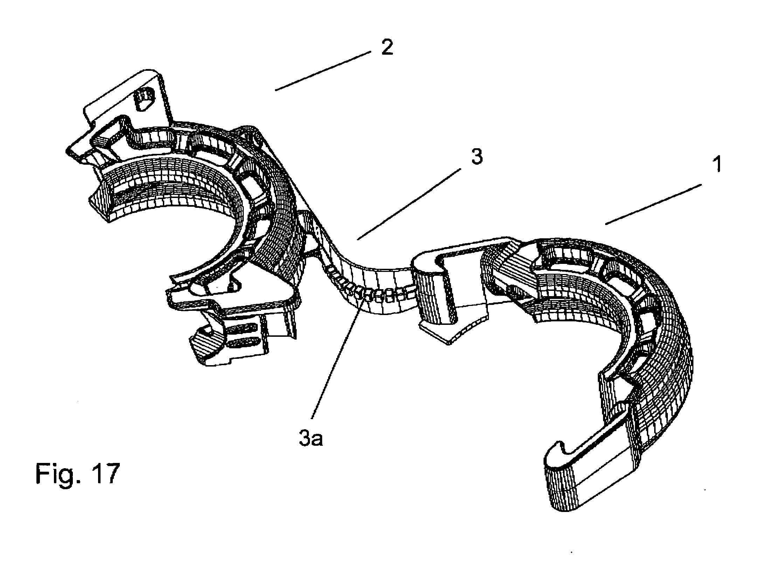

Fig. 17 zeigt ein weiteres Ausführungsbeispiel eines Verbindungselementes. Hierbei ist die flexible oder biegsame Brücke 3 als Rollband ausgebildet und weist an einer Oberfläche eine Nockenstruktur 3a auf. Somit wird das Band besonders widerstandsfähig und kann nicht mehr brechen.

## Patentansprüche

1. Anordnung mit einem Verbindungselement für eine Rohrkupplung von zwei Rohren, und mit einem ersten Rohr (12) und mit einem zweiten Rohr (13), wobei die beiden Rohre ineinander gesteckt sind und an ihren Rohrenden einen radial nach außen stehenden Wulst (23, 24) aufweisen, wobei die Wulste im eingeschobenen Zustand als Anschläge dienen, indem sie aneinander anstoßen, insbesondere für eine Klimaanlage für ein Kraftfahrzeug, umfassend ein erstes Elementteil (1) und ein zweites Elementteil (2), wobei jedes der Elementteile (1, 2) in radialer Richtung auf einen Kupplungsbereich eines Rohrs (12, 13) aufsetzbar ist und den Kupplungsbereich teilweise umfängt, wobei zumindest eines der Elementteile (1, 2) eine teilkreisförmige Innenbahn (4) aufweist, wobei die Innenbahn (4) eine Ausnehmung (4a) zur axial formschlüssigen Halterung des Kupplungsbereichs aufweist, wobei jedes der Elementteile (1, 2) zumindest ein erstes und ein zweites formschlüssiges Verbindungsmittel (6, 7, 8, 9) aufweist, wobei jedes der Verbindungsmittel (6, 7) des ersten Elementteils (1) mit jeweils einem der Verbindungsmittel (8, 9) des zweiten Elementteils (2) in Eingriff bringbar ist und die beiden miteinander in Eingriff stehenden Elementteile (1, 2) das Rohr (12, 13) insbesondere vollständig umfangen, und wobei das erste und das zweite Elementteil (1,2) die beiden Wulste (23, 24) übergreifen und eine Verbindung zwischen dem ersten Rohr und dem zweiten Rohr herstellen, **dadurch gekennzeichnet, dass** ein Dichtungselement (20), das zwischen den beiden Rohrenden angeordnet ist, eine druckdichte Verbindung der Rohre bewirkt, wobei in die Ausnehmung (4a) in Umfangsrichtung zumindest bereichsweise ein Steg (21) einstückig angeformt ist, wobei der Steg sich radial nach innen bis nahe an den Wulst (24) des ersten Rohrs (12) erstreckt und ein Verrasten des Verbindungselements verhindert, wenn sich das Dichtungsmittel (20) in einem Ringkanal zwischen dem ersten Rohr (12) und dem Verbindungselement befindet.

2. Anordnung nach Anspruch 1, **dadurch gekennzeichnet, dass** die beiden Elementteile (1, 2) über eine flexible Brücke (3) beabstandet miteinander verbunden sind.

3. Anordnung nach Anspruch 2, **dadurch gekennzeichnet, dass** die flexible Brücke als Rollband ausgeführt ist.

4. Anordnung nach einem der vorhergehenden Ansprüche, **dadurch gekennzeichnet, dass** zumindest ein, insbesondere jedes Verbindungsmittel (6, 7) des ersten Elementteils (1) nur unter Überwindung einer Rückstellkraft der flexiblen Brücke (3) mit dem zugeordneten Verbindungsmittel (8, 9) des zweiten Elementteils (2) in Eingriff bringbar ist, wobei insbesondere die flexible Brücke (3) sich bei miteinander in Eingriff stehenden Elementteilen (1, 2) in vorgespanntem Zustand befindet.

5. Anordnung nach einem der vorhergehenden Ansprüche, **dadurch gekennzeichnet, dass** zumindest eines der formschlüssigen Vereindungsmittel einen Haken (8, 9) umfasst, wobei ein Schaft (8a, 9a) des Hakens (8, 9) im festgelegten Zustand im Wesentlichen in Umfangsrichtung des Rohrs verläuft und ein Fortsatz des Hakens (8b, 9b) an einer Aufnahme (6, 7) eines der anderen formschlüssigen Verbindungsmittel hinterschneidend angreift und im Wesentlichen radial zu dem Rohr verläuft_

6. Anordnung nach einem der vorhergehenden Ansprüche, **dadurch gekennzeichnet, dass** ein oder beide Enden der flexiblen Brücke (3) jeweils von den Verbindungselementen (6, 7) zumindest eines Elemente teils (1) beabstandet, insbesondere in einem in Umfangsrichtung mittleren Bereich zumindest eines Elementteils angeordnet ist.

7. Anordnung nach einem der Ansprüche 5 oder 6, **dadurch gekennzeichnet, dass** die Aufnahme (6, 7) Wände (6b, 7b, 7c) aufweist, wobei der Haken (8, 9) im festgelegten Zustand von den Wänden (6b, 7b, 7c) zumindest teilweise abgedeckt wird.

8. Anordnung nach einem der vorhergehenden Ansprüche, **dadurch gekennzeichnet, dass** die formschlüssig aneinander festgelegten Elementteil (1, 2) nicht zerstörungsfrei lösbar sind, insbesondere nur durch Zerstörung oder Beschädigung der flexiblen Brücke lösbar sind.

9. Anordnung nach einem der vorhergehenden Ansprüche, **dadurch gekennzeichnet, dass** in zumindest einem der Elementteile (1, 2) zumindest eine Durchbrechung (10a, 11a) vorgesehen ist, wobei durch die Durchbrechung zumindest ein Gasaustausch zwischen dem Kupplungsbereich und einem Außenraum ermöglicht ist.

10. Anordnung nach einem der vorhergehenden Ansprüche, **dadurch gekennzeichnet, dass** das erste Elementteil (1) die teilkreisförmige Innenbahn (4) zur Anlage an dem Rohr aufweist, wobei die Innenbahn (4) einen Kreiswinkel von mehr als 180°, insbesondere zwischen etwa 190° und etwa 240°, einschließt und die Innenbahn (4) die Ausnehmung (4a) aufweist, in die in Umfangsrichtung zumindest bereichsweise der Steg (21) angeformt ist.

11. Anordnung nach einem der vorhergehenden Ansprüche, **dadurch gekennzeichnet, dass** jedes der Elementteile (1, 2) einen ersten Aufnahmebereich (15, 16) für das Rohr und zumindest einen benachbarten, zweiten Aufnahmebereich (15, 16) für ein weiteres Rohr aufweist,
wobei die Aufnahmebereiche (15, 16) jeweils eine teilkreisförmige Innenbahn (4) zur Anlage an dem jeweiligen Rohr aufweisen, wobei die Innenbahn (4) eine Ausnehmung (4a) aufweist, in die in Umfangsrichtung zumindest bereichsweise ein Steg (21) einstückig angeformt ist.

12. Anordnung nach Anspruch 11, **dadurch gekennzeichnet, dass** jeweils eine der dem ersten Rohr zugeordneten und der dem weiteren Rohr zugeordneten Innenbahnen (4) der Elementteile (1, 2) einen Kreiswinkel von mehr als 180°, insbesondere zwischen etwa 190° und etwa 240°, einschließt.

13. Anordnung nach einem der Ansprüche 11 bis 12, **dadurch gekennzeichnet, dass** die Elementteile (1, 2) zwischen den benachbarten Aufnahmebereichen (15, 16) jeweils ein formschlüssiges Verbindungsmittel (18) aufweisen.

14. Anordnung nach einem der Ansprüche 11 bis 13, **dadurch gekennzeichnet, dass** die beiden Elementteile (1, 2) als Gleichteile ausgebildet sind.

15. Anordnung nach einem der Ansprüche 11 bis 14, **dadurch gekennzeichnet, dass** eines der beiden Elementteile (1, 2) an einem seiner zumindest zwei Aufnahmebereiche (15, 16) eine Innenbahn (4) aufweist, die einen Kreiswinkel von mehr als 180°, insbesondere zwischen etwa 190° und etwa 240°, einschließt, und an dem anderen der Aufnahmebereiche (15, 16) eine Innenbahn (4) aufweist, die einen Kreiswinkel von weniger als 180° einschließt.

## Claims

1. An arrangement with a connecting element for a pipe coupling of two pipes, and with a first pipe (12) and with a second pipe (13), wherein both pipes are fit together and have a radially outwardly projecting bead (23, 24) on their pipe ends, wherein the beads in their engaged state act as stop collars, by adjoining each other, particularly for an air conditioning system for a motor vehicle, comprising a first element part (1) and a second element part (2), wherein each of the element parts (1, 2) can be attached to a coupling area of a pipe (12, 13) in the radial direction and partially surrounds the coupling area, wherein at least one of the element parts (1, 2) has a part-circular inner track (4), wherein the inner track (4) has a recess (4a) to the axially secured bracket of the coupling area, wherein each of the element parts (1, 2) has at least a first and second positive-locking joining means (6, 7, 8, 9), wherein each of the joining means (6, 7) of the first element part (1) can be engaged with a joining means (8, 9) of the second element part (2) and the two engaged element parts (1, 2) surround the pipe (12, 13) particularly completely and wherein the first and the second element part (1, 2) overlap the two beads (23, 24) and create a connection between the first pipe and the second pipe, **characterised in that** a sealing element (20), which is arranged between the two pipe ends, causes a pressure-tight connection of the pipes, wherein at least area by area a crosspiece (21) is formed integrally in the recess (4a) in the circumferential direction, wherein the crosspiece extends radially towards the inside until near to the bead (24) of the first pipe (12) and prevents the connecting element from catching, if the sealant (20) is in an annular channel between the first pipe (12) and the connecting element.

2. The arrangement according to claim 1, **characterised in that** the two element parts (1, 2) are connected with an interval between them by a flexible bridge (3).

3. The arrangement according to claim 2, **characterised in that** the flexible bridge is designed as a roller conveyor.

4. The arrangement according to any one of the preceding claims, **characterised in that** at least one, specifically every joining means (6, 7) of the first element part (1) can only be engaged with the assigned joining means (8, 9) of the second element part (2) by overcoming a resetting force of the flexible bridge (3), wherein particularly the flexible bridge (3) is in a prestressed state with the engaged element parts (1, 2).

5. The arrangement according to any one of the preceding claims, **characterised in that** at least one of the positive-locking joining means has a hook (8, 9), wherein a shaft (8a, 9a) of the hook (8, 9) substantially runs in the circumferential direction of the pipe in the specified state and an extension of the hook (8b, 9b) undercuts a socket (6, 7) of one of the other positive-locking joining means and substantially runs radially to the pipe.

6. The arrangement according to any one of the preceding claims, **characterised in that** one or both ends of the flexible bridge (3) are arranged spaced from the connecting elements (6, 7) of at least one element part (1), specifically disposed in a middle section in the circumferential direction of at least one element part.

7. The arrangement according to any one of claims 5 or 6, **characterised in that** the socket (6, 7) has walls (6b, 7b, 7c), wherein the hook (8, 9) is at least partially covered by the walls (6b, 7b, 7c) in the specified state.

8. The arrangement according to any one of the preceding claims, **characterised in that** the positively attached element parts (1, 2) cannot be loosened non-destructively, specifically can only be loosened by destroying or damaging the flexible bridge.

9. The arrangement according to any one of the preceding claims, **characterised in that** in at least one of the element parts (1, 2) at least one break (10a, 11a) is provided, wherein at least one gas exchange between the coupling area and an exterior space is facilitated through the break.

10. The arrangement according to any one of the preceding claims, **characterised in that** the first element part (1) has the part-circular inner track (4) to connect to the pipe, wherein the inner track (4) includes an inscribed angle of more than 180°, particularly between about 190° and 240° and the inner track (4) has the recess (4a), in which the crosspiece (21) is formed at least sectionally in the circumferential direction.

11. The arrangement according to any one of the preceding claims, **characterised in that** each of the element parts (1, 2) has an initial reception area (15, 16) for the pipe and at least one neighbouring, second reception area (15, 16) for a further pipe, wherein the reception areas (15, 16) each have a part-circular inner track (4) to connect to the relevant pipe, wherein the inner track (4) has a recess (4a), in which a crosspiece (21) is integrated at least sectionally in the circumferential direction.

12. The arrangement according to claim 11, **characterised in that** each one of the inner tracks (4) of the element parts (1, 2) assigned to the first pipe and assigned to the further pipe includes an inscribed angle of more than 180°, particularly between about 190° and 240°.

13. The arrangement according to any one of claims 11 to 12, **characterised in that** the element parts (1, 2) between the neighbouring reception areas (15, 16) each have a positive-locking joining means (18).

14. The arrangement according to any one of claims 11 to 13, **characterised in that** the two element parts (1, 2) are designed as carry over parts.

15. The arrangement according to any one of claims 11 to 14, **characterised in that** one of the two element parts (1, 2) has an inner track (4) at one of its at least two reception areas (15, 16), which includes an inscribed angle of more than 180°, particularly between about 190° and 240°, and has an inner track (4) at the other of the reception areas (15, 16), which includes an inscribed angle of less than 180°.

## Revendications

1. Agencement avec un élément de liaison pour un accouplement tubulaire de deux tubes, comprenant un premier tube (12) et un second tube (13), où les deux tubes sont emboîtés l'un dans l'autre et présentent, au niveau de leurs extrémités tubulaires, un bourrelet (23, 24) faisant saillie vers l'extérieur dans le sens radial, où les bourrelets, à l'état inséré, servent de butées, quand ils sont en appui l'un contre l'autre, agencement qui est utilisé en particulier pour un système de climatisation pour un véhicule automobile et qui comprend une première partie d'élément (1) et une seconde partie d'élément (2), où chacune des parties d'élément (1, 2) peut être montée sur une zone d'accouplement d'un tube (12, 13), dans le sens radial, et entoure partiellement la zone d'accouplement, où au moins l'une des parties d'élément (1, 2) présente une piste intérieure (4) en forme de cercle partiel, où la piste intérieure (4) présente un évidement (4a) servant à la retenue de la zone d'accouplement, réalisée par complémentarité de forme dans le sens axial, où chacune des parties d'élément (1, 2) présente au moins un premier et un deuxième moyens de liaison (6, 7, 8, 9) réalisée par complémentarité de forme, où chacun des moyens de liaison (6, 7) de la première partie d'élément (1) peut à chaque fois venir en prise avec l'un des moyens de liaison (8, 9) de la seconde partie d'élément (2), et les deux parties d'élément (1, 2), qui sont en prise l'une avec l'autre, entourent le tube (12, 13), en particulier de manière totale, et où la première et la seconde partie d'élément (1, 2) recouvrent les deux bourrelets (23, 24) et établissent une liaison entre le premier tube et le second tube, **caractérisé en ce qu'**un élément d'étanchéité (20), qui est disposé entre les deux extrémités tubulaires, assure une liaison des tubes, étanche sous pression, où une barrette (21) d'un seul tenant est formée dans l'évidement (4a), au moins partiellement dans la direction circonférentielle, où la barrette s'étend vers l'intérieur dans le sens radial, jusqu'à proximité du bourrelet (24) du premier tube (12), et empêche un verrouillage de l'élément de liaison, quand le moyen d'étanchéité (20) se trouve, dans un conduit annulaire, placé entre le premier tube (12) et l'élément de liaison.

2. Agencement selon la revendication 1, **caractérisé en ce que** les deux parties d'élément (1, 2) sont reliées l'une à l'autre en étant espacées par un pont flexible (3).

3. Agencement selon la revendication 2, **caractérisé en ce que** le pont flexible est réalisé comme une bande de roulement.

4. Agencement selon l'une quelconque des revendications précédentes, **caractérisé en ce qu'**au moins un moyen, en particulier chaque moyen de liaison (6, 7) de la première partie d'élément (1) ne peut venir en prise avec le moyen de liaison associé (8, 9) de la seconde partie d'élément (2) qu'en surmontant une force de rappel du pont flexible (3), où en particulier le pont flexible (3) se trouve dans un état précontraint quand les parties d'élément (1, 2) sont en prise l'une avec l'autre.

5. Agencement selon l'une quelconque des revendications précédentes, **caractérisé en ce qu'**au moins l'un des moyens de liaison réalisée par complémentarité de forme présente un crochet (8, 9), où une tige (8a, 9a) du crochet (8, 9) s'étend, à l'état fixé, pratiquement dans la direction circonférentielle du tube, et un prolongement du crochet (8b, 9b) s'accroche par l'arrière à un logement (6, 7) de l'un des autres moyens de liaison réalisée par complémentarité de forme et s'étend pratiquement de façon radiale par rapport au tube.

6. Agencement selon l'une quelconque des revendications précédentes, **caractérisé en ce qu'**une ou les deux extrémités du pont flexible (3) s'écarte(nt) à chaque fois des éléments de liaison (6, 7) d'au moins une partie d'élément (1), est ou sont disposée(s) en particulier dans une zone centrale d'au moins une partie d'élément, ladite zone s'étendant dans une direction circonférentielle.

7. Agencement selon l'une des revendications 5 ou 6, **caractérisé en ce que** le logement (6, 7) présente des parois (6b, 7b, 7c), où le crochet (8, 9), à l'état fixé, est recouvert au moins partiellement par les parois (6b, 7b, 7c).

8. Agencement selon l'une quelconque des revendications précédentes, **caractérisé en ce que** les parties d'élément (1, 2) fixées l'une contre l'autre par complémentarité de forme ne sont pas détachables de façon non destructive, sont détachables en particulier seulement par destruction ou par endommagement du pont flexible.

9. Agencement selon l'une quelconque des revendications précédentes, **caractérisé en ce qu'**il est prévu dans au moins l'une des parties d'élément (1, 2), au moins une ouverture (10a, 11a) où, grâce à l'ouverture, au moins un échange gazeux est rendu possible entre la zone d'accouplement et un espace extérieur.

10. Agencement selon l'une quelconque des revendications précédentes, **caractérisé en ce que** la première partie d'élément (1) présente la piste intérieure (4) en forme de cercle partiel servant d'appui sur le tube, où la piste intérieure (4) forme un angle de cercle de plus de 180°, en particulier compris entre 190° environ et 240° environ, et la piste intérieure (4) présente l'évidement (4a) dans lequel la barrette (21) est formée au moins partiellement dans la direction circonférentielle.

11. Agencement selon l'une quelconque des revendications précédentes, **caractérisé en ce que** chacune des parties d'élément (1, 2) présente une première zone de logement (15, 16) pour le tube et au moins une deuxième zone de logement voisine (15, 16) pour un autre tube, où les zones de logement (15, 16) présentent à chaque fois une piste intérieure (4) en forme de cercle partiel servant d'appui sur le tube respectif, où la piste intérieure (4) présente un évidement (4a) dans lequel une barrette (21) d'un seul tenant est formée au moins partiellement dans la direction circonférentielle.

12. Agencement selon la revendication 11, **caractérisé en ce que** l'une des pistes intérieures (4) des parties d'élément (1, 2), associée au premier tube, et celle associée à l'autre tube, forment à chaque fois un angle de cercle de plus de 180°, en particulier compris entre 190° environ et 240° environ.

13. Agencement selon l'une des revendications 11 ou 12, **caractérisé en ce que** les parties d'élément (1, 2) présentent à chaque fois, entre les zones de logement voisines (15, 16), un moyen de liaison (18) réalisée par complémentarité de forme.

14. Agencement selon l'une quelconque des revendications 11 à 13, **caractérisé en ce que** les deux parties d'élément (1, 2) sont conçues comme des pièces identiques.

15. Agencement selon l'une quelconque des revendications 11 à 14, **caractérisé en ce que** l'une des deux parties d'élément (1, 2) présente, sur au moins l'une de ses deux zones de logement (15, 16), une piste intérieure (4) qui forme un angle de cercle de plus de 180°, en particulier compris entre 190° environ et 240° ° environ, et présente, sur l'autre zone de logement (15, 16), une piste intérieure (4) qui forme un angle de cercle de moins de 180°.
